(19)

Europäisches
Patentamt
European
Patent Office
Office européen
des brevets

(11) **EP 2 706 504 A2**

(12) **EUROPEAN PATENT APPLICATION**

(43) Date of publication:
**12.03.2014 Bulletin 2014/11**

(51) Int Cl.:
***G06T 7/00*** (2006.01)

(21) Application number: **13182719.8**

(22) Date of filing: **03.09.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.09.2012 PCT/FI2012/050861**

(71) Applicant: **Nokia Corporation
02150 Espoo (FI)**

(72) Inventors:
• **Smirnov, Sergey
  33710 Tampere (FI)**
• **Gotchev, Atanas
  33720 Tampere (FI)**
• **Hannuksela, Miska
  36110 Ruutana (FI)**

(74) Representative: **Nokia Corporation
Intellectual Property Department
Keilalahdentie 4
02150 Espoo (FI)**

(54) **An apparatus, a method and a computer program for image processing**

(57)    There is provided methods, apparatuses and computer program products for image processing in which a pair of images may be downsampled to lower resolution pair of images and further to obtain a disparity image representing estimated disparity between at least a subset of pixels in the pair of images. A confidence of the disparity estimation may be obtained and inserted into a confidence map. The disparity image and the confidence map may be filtered jointly to obtain a filtered disparity image and a filtered confidence map by using a spatial neighborhood of the pixel location. An estimated disparity distribution of the pair of images may be obtained through the filtered disparity image and the confidence map.

Fig. 13

EP 2 706 504 A2

**Description**

Technical Field

The present invention relates to an apparatus, a method and a computer program for image processing.

Background Information

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Various technologies for providing three-dimensional (3D) video content are currently investigated and developed.In various multiview applications a viewer is able to see only one pair of stereo video from a specific viewpoint and another pair of stereo video from a different viewpoint. In some approaches only a limited number of input views, e.g. a mono or a stereo video plus some supplementary data, is provided to a decoder side and all required views are then rendered (i.e. synthesized) locally by the decoder to be displayed on a display.

In the encoding of 3D video content, video compression systems, such as Advanced Video Coding standard H.264/AVC or the Multiview Video Coding MVC extension of H.264/AVC can be used.

Capturing of stereoscopic video may be performed by two horizontally-aligned and synchronized cameras. The distance between the optical centers of the cameras is known as a baseline distance. Stereo correspondences refer to pixels in the two cameras reflecting the same scene point. Knowing the camera parameters, the baseline and the corresponding points, one can find three-dimensional (3D) coordinates of scene points by applying e.g. a triangulation-type of estimation. Applying the same procedure for all pixels in the two camera images, one can obtain a dense camera-centered distance map (depth map). It provides a 3D geometrical model of the scene and can be utilized in many 3D video processing applications, such as coding, repurposing, virtual view synthesis, 3D scanning, objects detection and recognition, embedding virtual objects in real scenes (augmented reality), etc.

In multi-view applications there may be more than two cameras which may be logically arranged into multiple pairs of cameras. Hence, the same scene may be captured by these cameras giving the possibility to provide stereoscopic video from different views of the same scene.

A problem in depth map estimation is how to reliably find correspondences between pixels in two-camera views. Usually, camera views may be rectified, and correspondences are restricted to be occurring in horizontal lines. Such correspondences are referred to as disparity. The process of finding disparity map (correspondences between pixels of two rectified image views) is referred to as stereo-matching. Some stereo-matching approaches apply local or global optimization criteria subject to some application-oriented constraints to tackle specific problems in real-world stereo imagery.

Many stereo-matching algorithms search for matches within a disparity range. The selection of correct disparity search range for an arbitrary stereoscopic imagery may be problematic, especially in case of real-world and outdoor applications where manual range selection may be rather impractical. Too narrow search range selection may lead to undesired quality degradation of estimated disparities. At the same time, a very wide (e.g. non-constrained) range for stereo-matching may increase the computational complexity unnecessarily. The complexity of modern stereo-matching techniques may be linearly dependent on the number of sought disparity levels (hypotheses). Even if a pre-selected disparity range were used, the scene may change during the scene capture (e.g. stereoscopic photo or video shooting), thus changing the used (pre-selected) disparity range.

Summary

This invention is related to an apparatus, a method and a computer program for image processing in which a pair of images may be downsampled to lower resolution pair of images and further to obtain a disparity image representing estimated disparity between at least a subset of pixels in the pair of images. A confidence of the disparity estimation may be obtained and inserted into a confidence map. The disparity image and the confidence map may be filtered jointly to obtain a filtered disparity image and a filtered confidence map by using a spatial neighborhood of the pixel location. An estimated disparity distribution of the pair of images may be obtained through the filtered disparity image and the confidence map.

Some embodiments provide automatic, content-independent disparity range selection algorithms for rectified stereoscopic video content.

Some embodiments of the invention use a pyramidal approach. However, instead of merely using confidence for disparity range determination, spatial filtering of the first disparity estimate and the confidence map for effective outlier removal may be applied. Consequently, only a few layers may be needed. In some embodiments only two layers of the pyramid are used.

In the following, some features in the disparity range estimation according to some embodiments of the present invention are briefly presented.

A constant-complexity Sum of Absolute Differences (SAD) matching may be used which allows changing the matching window size with no or only a minor effect on computational complexity.

A single downsampling step may be used instead of few layers of pyramid. This may lead predictable and stable procedure behavior. It is also possible to adjust the computational speed by changing the downsampling factor.

Suitable spatial filtering on the initial disparity estimate may be used for better outlier removal.

Temporally-consistent assumption with no particular temporal filtering applied to successive video frames may be utilized.

Various aspects of the invention include methods, apparatuses, computer programs, an encoder and decoder, which are characterized by what is stated in the independent claims. Various embodiments of the invention are disclosed in the dependent claims.

According to a first aspect, there is provided a method comprising:

downsampling a pair of input images to a lower resolution pair of a first image and a second image,
estimating disparity between at least a subset of pixels in the first image and at least a subset of pixels in the second image into a disparity image,
estimating a confidence of said disparity estimation for at least a subset of pixels in the disparity image into a confidence map,
filtering the disparity image and the confidence map to obtain a filtered disparity image and a filtered confidence map, wherein said filtering uses a spatial neighborhood of a pixel location of a pixel to be filtered, and
estimating a disparity distribution of said pair of images through the filtered disparity image and the filtered confidence map.

According to a second aspect, there is provided an apparatus comprising at least one processor and at least one memory including computer program code, the at least one memory and the computer program code configured to, with the at least one processor, cause the apparatus to perform at least the following:

downsampling a pair of input images to a lower resolution pair of a first image and a second image,
estimating disparity between at least a subset of pixels in the first image and at least a subset of pixels in the second image into a disparity image,
estimating a confidence of said disparity estimation for at least a subset of pixels in the disparity image into a confidence map,
filtering the disparity image and the confidence map to obtain a filtered disparity image and a filtered confidence map, wherein said filtering uses a spatial neighborhood of a pixel location of a pixel to be filtered, and
estimating a disparity distribution of said pair of images through the filtered disparity image and the filtered confidence map.

According to a third aspect, there is provided a computer program product including one or more sequences of one or more instructions which, when executed by one or more processors, cause an apparatus to perform at least the following:

downsampling a pair of input images to a lower resolution pair of a first image and a second image,
estimating disparity between at least a subset of pixels in the first image and at least a subset of pixels in the second image into a disparity image,
estimating a confidence of said disparity estimation for at least a subset of pixels in the disparity image into a confidence map,
filtering the disparity image and the confidence map to obtain a filtered disparity image and a filtered confidence map, wherein said filtering uses a spatial neighborhood of a pixel location of a pixel to be filtered, and
estimating a disparity distribution of said pair of images through the filtered disparity image and the filtered confidence map.

According to a fourth aspect, there is provided an apparatus comprising:

a downsampler adapted to downsample a pair of images to a lower resolution pair of a first image and a second image,
a disparity estimator adapted to estimating disparity between at least a subset of pixels in the first image and at least a subset of pixels in the second image into a disparity image,
a confidence estimator adapted to estimating a confidence of said disparity estimation for at least a subset of pixels in the disparity image into a confidence map,
a filter adapted for filtering the disparity image and the confidence map to obtain a filtered disparity image and a filtered confidence map, wherein said filtering uses a spatial neighborhood of a pixel location of a pixel to be filtered, and
a disparity distribution estimator adapted to estimate a disparity distribution of said pair of images through the filtered disparity image and the filtered confidence map.

According to a fifth aspect, there is provided an apparatus comprising:

means for downsampling a pair of images to a lower resolution pair of a first image and a second image,
means for estimating disparity between at least a subset of pixels in the first image and at least a subset of pixels in the second image into a disparity image,
means for estimating a confidence of said disparity estimation for at least a subset of pixels in the disparity image into a confidence map,
means for filtering the disparity image and the confidence map to obtain a filtered disparity image and a filtered confidence map, wherein said filtering uses a spatial neighborhood of a pixel location of a pixel to be filtered, and
means for estimating a disparity distribution of said pair of images through the filtered disparity image and the filtered confidence map.

According to a sixth aspect, there is provided an apparatus comprising means for performing the method according to any of claims 1 to 12.

Description of the Drawings

For better understanding of various embodiments, reference will now be made by way of example to the accompanying drawings in which:

Figure 1 shows a simplified 2D model of a stereoscopic camera setup;
Figure 2 shows a simplified model of a multiview camera setup;
Figure 3 shows a simplified model of a multiview autostereoscopic display (ASD);
Figure 4 shows a simplified model of a DIBR-based 3DV system;
Figures 5 and 6 show an example of a time-of-flight -based depth estimation system;
Figure 7 shows an example of an apparatus according to an example embodiment as a simplified block diagram;
Figures 8a and 8b illustrate an example of forming a disparity map on the basis of a left image and a right image;
Figures 9a-9h show an example of using a summed area table algorithm;
Figure 10 shows schematically an electronic device suitable for employing some embodiments;
Figure 11 shows schematically a user equipment suitable for employing some embodiments;
Figure 12 further shows schematically electronic devices employing embodiments using wireless and wired network connections; and
Figure 13 shows a method according to an example embodiment as a flow diagram.

Detailed Description

Next, for understanding the embodiments, some aspects of three-dimensional (3D) multiview applications and the concepts of depth and disparity information closely related thereto are described briefly.
Stereoscopic video content consists of pairs of offset images that are shown separately to the left and right eye of the viewer. These offset images are captured with a specific stereoscopic camera setup and it assumes a particular stereo baseline distance between cameras.

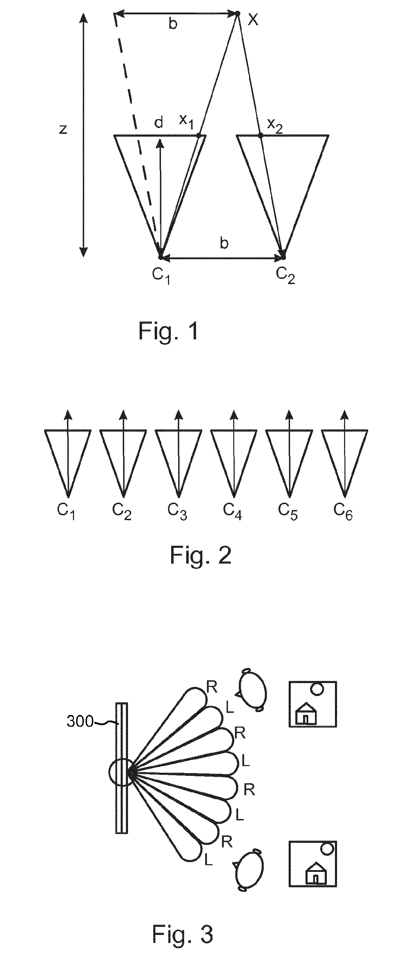

Figure 1 shows a simplified 2D model of such stereoscopic camera setup. In Fig. 1, C1 and C2 refer to cameras of the stereoscopic camera setup, more particularly to the center locations of the cameras, b is the distance between the centers of the two cameras (i.e. the stereo baseline), f is the focal length of cameras and X is an object in the real 3D scene that is being captured. The real world object X is projected to different locations in images captured by the cameras C1 and C2, these locations being x1 and x2 respectively. The horizontal distance between x1 and x2 in absolute coordinates of the image is called disparity. The images that are captured by the camera setup are called stereoscopic images, and the disparity presented in these images creates or enhances the illusion of depth. For enabling the images to be shown separately to the left and right eye of the viewer, typically specific 3D glasses are required to be used by the viewer. Adaptation of the disparity is a key feature for adjusting the stereoscopic video content to be comfortably viewable on various displays.

However, disparity adaptation is not a straightforward process. It may require either having additional camera views with different baseline distances (i.e., b is variable) or rendering of virtual camera views which were not available in real world. Figure 2 shows a simplified model of such multiview camera setup that suits to this solution. This setup is able to provide stereoscopic video content captured with several discrete values for stereoscopic baseline and thus allow stereoscopic display to select a pair of cameras that suits to the viewing conditions.

A more advanced approach for 3D vision is having a multiview autostereoscopic display (ASD) that does not require glasses. The ASD emits more than one view at a time but the emitting is localized in the space in such a way that a viewer sees only a stereo pair from a specific viewpoint, as illustrated in Figure 3, wherein the boat is seen in the middle of the view when looked at the right-most viewpoint. Moreover, the viewer is able to see another stereo pair from a different viewpoint, e.g. in Fig. 3 the boat is seen at the right border of the view when looked at the left-most viewpoint. Thus, motion parallax viewing is supported if consecutive views are stereo pairs and they are arranged properly. The ASD technologies may be capable of showing for example 52 or more different images at the same time, of which only a stereo pair is visible from a specific viewpoint. This supports multiuser 3D vision without glasses, for example in a living room environment.

In depth image-based rendering (DIBR) stereoscopic video and corresponding depth information with stereoscopic baseline are taken as input and a number of virtual views are synthesized between the two input views. Thus, DIBR algorithms may also enable extrapolation of views that are outside the two input views and not in between them. Similarly, DIBR algorithms may enable view synthesis from a single view of texture and the respective depth view.

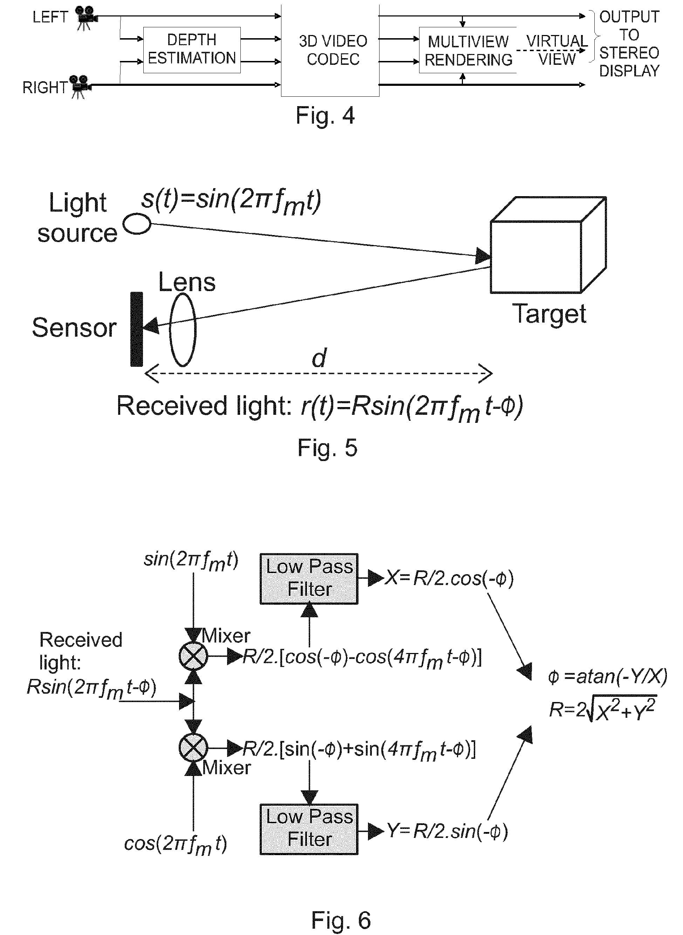

A simplified model of a DIBR-based 3DV system is shown in Figure 4. The input of a 3D video codec comprises a stereoscopic video and corresponding depth information with stereoscopic baseline b0. Then the 3D video codec synthesizes a number of virtual views between two input views with baseline (bi < b0). DIBR algorithms may also enable extrapolation of views that are outside the two input views and not in between them. Similarly, DIBR algorithms may enable view synthesis from a single view of texture and the respective depth view. However, in order to enable DIBR-based multiview rendering, texture data should be available at the decoder side along with the corresponding depth data.

In such 3DV system, depth information is produced at the encoder side in a form of depth pictures (also known as depth maps) for each video frame. A depth map is an image with per-pixel depth information. Each sample in a depth map represents the distance of the respective texture sample from the plane on which the camera lies. In other words, if the z axis is along the shooting axis of the cameras (and hence orthogonal to the plane on which the cameras lie), a sample in a depth map represents the value on the z axis.

Depth information can be obtained by various means. For example, depth of the 3D scene may be computed from the disparity registered by capturing cameras. A depth estimation algorithm takes a stereoscopic view as an input and computes local disparities between the two offset images of the view. Each image is processed pixel by pixel in overlapping blocks, and for each block of pixels a horizontally localized search for a matching block in the offset image is performed. Once a pixel-wise disparity is computed, the corresponding depth value z is calculated by equation (1):

$$z = \frac{f \cdot b}{d + \Delta d} \qquad (1),$$

where f is the focal length of the camera and b is the baseline distance between cameras, as shown in Figure 1. Further, d may be considered to refer to the disparity estimated between corresponding pixels in the two cameras or the disparity estimated between corresponding pixels in the two cameras. The camera offset $\Delta d$ may be considered to reflect a possible horizontal misplacement of the optical axes of the two cameras or a possible horizontal cropping in the camera frames due to pre-processing.

Disparity or parallax maps, such as parallax maps specified in ISO/IEC International Standard 23002-3, may be processed similarly to depth maps. Depth and disparity have a straightforward correspondence and they can be computed from each other through the aforementioned mathematical equation.

A texture view refers to a view that represents ordinary video content, for example has been captured using an ordinary camera, and is usually suitable for rendering on a display.

Generating disparity maps by comparing left and right images and trying to find the best match is not always straightforward task. In the stereoscopic camera set-up the left camera produces an image which has a large number of similarities with the corresponding image produced by the right camera, but due to the small difference (baseline) in the location of the cameras there are some differences between the left and right image. Moreover, a foreground object in the scene may cause that some details which are visible in one of the images are hidden by the object so that the other image does not contain such details. This phenomenon may be called occlusion or occluded details. Furthermore, some details near a vertical edge of one of the images may be outside of the viewing angle of the other camera. For example, some details which are visible at the left edge of a left image may be missing from the right image. Respectively, some details which are visible at the right edge of a right image may be missing from the left image. Therefore, it may not be possible to determine disparity for such areas.

In some embodiments an occlusion map may be generated to indicate which parts of an image of a stereo pair are not visible in the other image of the stereo pair. The occlusion map may also be used to determine which values in the disparity map may not be correct.

In addition to the disparity map and the occlusion map, a confidence map may also be calculated indicating how confident the disparity values of the disparity map are.

In the following some example embodiments will be described in more detail by using a stereo camera set-up as a source of two different images or sequences of images (e.g. a video stream) captured from the same scene. However, similar principles are also applicable to multi-view application. It is also possible that the source of images is retrieved from a memory, received by a receiver, generated by a computer program etc.

In the following the two different images may also be called as a left image and a right image, but embodiments of the invention are not limited to such arrangements only. In other words, images may have been captured by two cameras which are not horizontally aligned but e.g. vertically aligned.

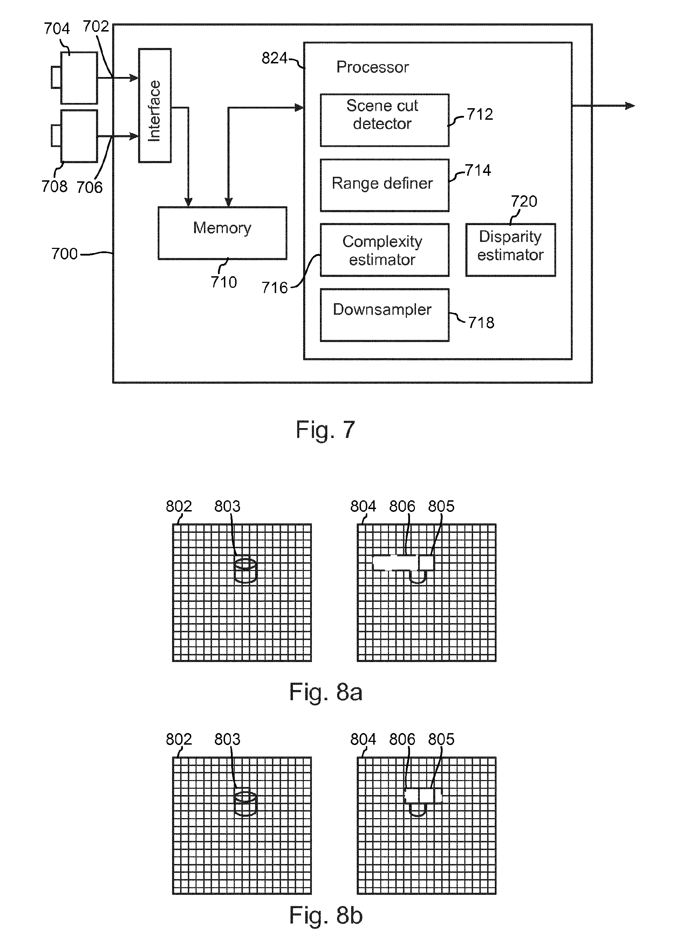

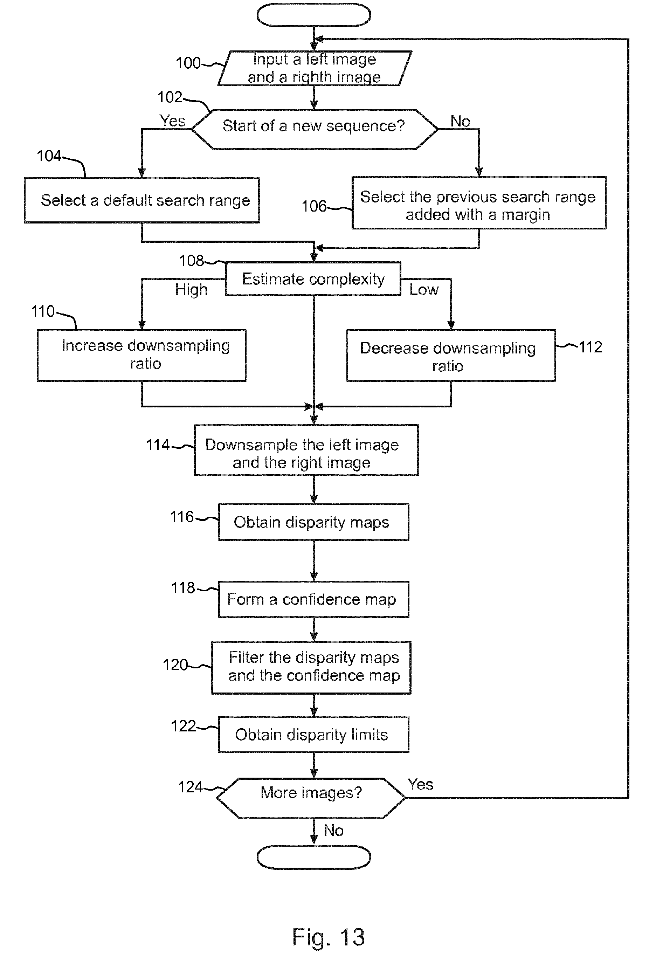

In the example apparatus 700 of Figure 7 a first camera signal 702 from a first camera 704 and a second camera signal 706 from a second camera 708 are received by the apparatus 700. This is illustrated with block 100 in Figure 13. The signals 702, 706 may already be in digital form or if the signals are in analog form they may be converted to digital signals by an analog to digital converter (not shown). In this example setup the first camera signal carries left images and the second camera signal carries right images of a scene. Images, which may also be called as pictures or frames, comprise a pixel matrix in which each pixel value represents a property (e.g. luminance) of one small part of the image. A pixel may actually contain more than one pixel value each representing a different colour component. For example, a pixel may contain three pixel or component values, one for red, one for green and one for blue colour representing intensities of these colours in the image at the pixel location. In another example, a pixel may contain three pixel or component values, one for luma or luminance, often referred to as the Y component, and two for chroma or chrominance, often referred to as the Cb and Cr components or U and V components. Component pixels may be arranged in a spatially interleaved manner, for example as a Bayer matrix.

The received pixel values of the image pair may be stored into a frame memory 710 for further processing, or provided directly to further processing steps. Contents of the image is examined by a scene cut detector 712 and compared to a previous image, if any, to determine whether the image is a part of a previous sequence or starts a new sequence of images (block 102). The determination may be performed on the basis of either one frame of the image pair (i.e. on the basis of the left image or the right image), or on the basis of both the left and the right images. A new sequence of images may occur e.g. when there is a scene cut in the sequence of images. In live capturing processes a scene cut may be due to a change in the camera pair from which the image information is received by the apparatus 700.

For disparity analysis purposes a range defining element 714 of the apparatus defines an initial search range for the determination of disparities for the image. A range defining element 714 may operate with one component image, such as the image consisting of the luma component pixels, or it may use more than one component images jointly. When more than one component image is used, the pixel-wise operations such as pixel-wise absolute difference may be performed independently per component type and an average or sum of the result of pixel-wise operations may be used in subsequent processing. Alternatively, an Euclidean distance or other distance measure may be derived in an N-dimensional space (where N may be equal to the number of component images) wherever a pixel-wise difference would otherwise be used. If the scene cut detection means 712 determined that the image pair begins a new sequence of images, then the range defining means 714 may select a default search range (block 104), which may be a full possible search range or another search range smaller than the full possible range. Otherwise, the range defining means 714 may utilize the same search range which was used in the analyses of a previous image. Hence, the previous search range added with a margin could be used (block 106). In some embodiments the margin could be 10 pixels, 15 pixels, 20 pixels or another appropriate value. It should be noted that the margin need not be same to both an upper limit and a lower limit but may differ from each other. The utilization of the previous search range possibly expanded with some margins is based on the assumption that disparity content does not usually change dramatically within a single scene cut. Furthermore, the margin can be different in different embodiments, may be changed e.g. when a resolution of the images or one or more other parameters of the image is changed, etc.

In addition to setting the range, matching complexity may also be estimated e.g. by a complexity estimator 716 (block 108). In general, computational complexity of stereo-matching methods may be linearly-dependent on the number of possible disparity layers. It may also be linearly dependent on the spatial resolution. A rough estimate of the computational time of the stereo-matching procedure may be defined as $A*D*M$, where A is a parameter describing computational capability of a particular platform and complexity of a particular matching algorithm, D is the number of disparity layers, and M is the number of pixels in the frame. Balancing can be done through changing the value of D (coarser disparities) and M (downsampling). Changing M may cause that D changes as well.

If the complexity estimator 716 determines that the estimated matching complexity exceeds a pre-defined limit, downsampling ratio may be increased (block 110) to ensure nearly-constant complexity (i.e. nearly constant computational time). If the estimated complexity is significantly lower than allowed, downsampling ratio may be decreased (block 112) in order to increase robustness.

In some embodiments the downsampling ratio may first be set to a value (e.g. 1) indicating that no downsampling at all shall be performed and if the complexity estimator 716 determines that the estimated matching complexity exceeds a pre-defined limit, the downsampling ratio is increased.

When the downsampling ratio has been determined and if it indicates that downsampling should be performed, the left image and right image are downsampled by the downsampling ratio in a downsampler 718 (block 114). The downsampler 718 produces downsampled images of the left image and the right image i.e. images having smaller resolution than the original left and right image. In the downsampler any downsampling algorithm may be used. The downsampled images may also be stored into the frame memory 710. In some embodiments, the original images strored into the frame memory 710 may not be affected by the downsampling but downsampled images may instead be stored into a different part of the frame memory 710.

The downsampled images are used by a disparity estimator 720 to obtain disparity estimates for the current image pair (block 116). The disparity estimator 720 and block 116 may use any disparity estimation algorithm which may also be referred to as stereo matching or depth estimation algorithms. For example, the disparity estimator 720 and block 116 may use a local matching algorithm based on finding a sample- or window-wise correspondence between a stereo pair (a left image and a right image). In another example, the disparity estimator 720 and block 116 may use a global optimization algorithm, which may minimize a cost function based on selected assumptions such as smoothness of depth maps and continuity of depth edges.

In some embodiments the disparity estimator 720 applies O(1)-complexity sum of absolute differences (SAD) stereo-matching with a pre-defined window size, constrained by initial range limits (taking into account the downsampling ratio).

Some implementations of stereoscopic block-matching have linear (O(N)) complexity regarding the window (block) size i.e. the time required to perform the block-matching increases proportionally to the increase of window size. In some embodiments of the present invention summed area tables (SAT) may be used in order to make matching complexity to be substantially constant regarding the matching window size, i.e. the implementations have O(1) complexity or near to O(1) complexity when the matching window size is pre-defined, or O(N) or near to O(N) complexity where N is proportional to the matching window size. Another reason behind utilizing such matching approach is that the resulting disparity map need not to participate in the final full-resolution disparity estimate, so there is no need for the disparity map to be perfectly aligned.

The disparity map estimation may be performed from left-to-right (i.e. using the left image as the reference), from right-to-left (i.e. using the right image as the reference), or both. If both directions are used, it may be possible to more reliably determine which parts of one image are occluded from the other image, because for such areas a one-to-one correspondence may not be found in both directions but only in one direction.

The disparity estimator 720 may also form a confidence map and/or an occlusion map using the information obtained during the disparity map generation process (block 118).

In the following an example embodiment of forming the disparity map is depicted in more detail with reference to Figures 8a and 8b. Figure 8a shows a situation in which a default search range is used and Figure 8b shows a situation in which a previously defined search range is used. The examples illustrate a block matching algorithm but also other algorithms may be used. In the following it is also assumed that a left-to-right search is first made, i.e. blocks of the left image are selected as source blocks and blocks of the right image are used to find out correspondent blocks from the right image. However, it is also possible to start with right-to-left search. In the left-to-right search the disparity estimator 720 selects a block 803 of size M x N from the left image 802 and searches blocks 805 of the same size in the right image 804 to find out which block in the right image has the best correspondence with the selected block of the left image. Some examples of possible block sizes are 1 x1 i.e. one pixel only, 2x2, 3x3, 4x4, 5x5, 8x8, 7x5 etc.

The search may be limited within a certain range, i.e. a search range 806, instead of the whole image area. The search range 806 may be an initial search range or a previous search range may be utilized as was described above. In the block matching procedure some further assumptions may also be utilized to speed up the process. In the case of left-to-right search and a parallel camera setup, it can be assumed that the correspondent block in the right image, if any, is either at the same location in the right image than the source block in the left image, or to the left from the location of the source block. Hence, block to the right of the location of the source image need not be examined. This assumption is based on the fact that if the images represent the same scene from two, horizontally aligned locations, the objects visible in the left image are located more to the left (or in the same location) in the right image. Furthermore, it can be assumed that it is sufficient to examine only horizontally aligned blocks i.e. blocks which have the same vertical location than the source block. In embodiments in which the images are not representing the same scene from different horizontally aligned locations but e.g. from vertically aligned or diagonally aligned positions, the search range may need to be defined differently.

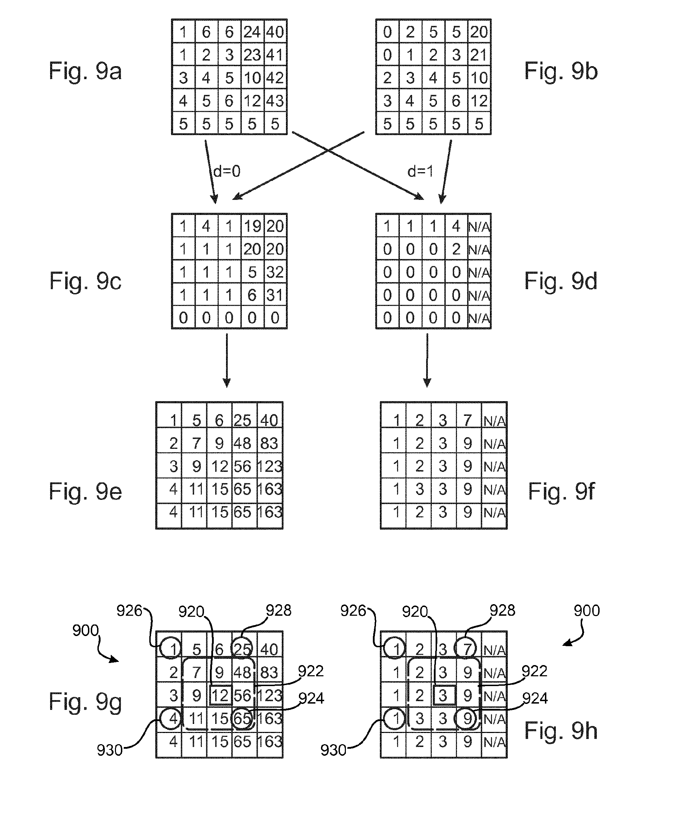

The disparity estimator 720 may determine which block in the right image corresponds with the source block in the left image e.g. as follows. The disparity estimator 720 may form a SAD image in which each value represents an absolute difference of pixel values in the source block and the corresponding pixel values in the block under evaluation (i.e. the block in the right image in this example). Different SAD images may be defined for different disparity values. Figure 9a illustrates an example of a part of an original left image and Figure 9b illustrates a part of an example of an original right image. For clarity, the size of the images is 5x5 but in practical implementations the size may be different. Figure 9c illustrates a SAD image calculated on the basis of pixel values of the original left image and the original right image with the disparity equal to 0 i.e. the absolute difference values are calculated between pixel values in the same location in both the left image and the right image. This can be expressed as an equation AD(x,y)=abs(L(x,y)-R(x,y)), in which L(x,y) represents the pixel value in the left image at the location x, y and L(x,y) represents the pixel value in the right image at the location x, y. Figure 9d illustrates a SAD image calculated on the basis of pixel values of the original left image and the original right image with the disparity equal to 1 i.e. the absolute difference values are calculated between pixel values shifted by 1 in the horizontal direction. This can be expressed as an equation AD(x,y)=abs(L(x, y)-R(x+1,y)). Other SAD images within the disparity range may be obtained correspondingly.

The SAD images may be used to calculate integral SAD images 900 (a.k.a. summed area tables, SAT) e.g. as follows. It is assumed that the calculation is performed from the upper left corner to the lower right corner of the SAD image but another direction may also be used.

The left-most element in the upper-most row of the integral SAD image receives the absolute difference value of the left-most element in the upper-most row of the SAD image. The next value in the upper-most row gets the sum of the value of the left-most element and the next element, the third element gets the sum of the absolute difference values of the first element, the second element and the third element of the image, etc. In other words, if the absolute difference value of a certain pixel in the SAD image (element in the sum of absolute difference values table) is depicted as a(i,j) in which i is the row index and j is the column index, and the corresponding value in the SAD image is depicted as s(i,j), the following equation applies:

$$s(0, j) = \sum_{k=0}^{j} a(0, k) \tag{2},$$

Generally, the values of elements of the SAD image can be obtained by the following equation:

$$s(i, j) = \sum_{k=0}^{j} \sum_{m=0}^{i} a(m, k) \tag{3},$$

In other words, the value s(i,j) corresponds with the sum of values in the area of the SAD image defined by i and j.

Figure 9e illustrates the integral SAD image of the SAD image of Figure 9c (i.e. with disparity equal to 0) and Figure 9f illustrates the integral SAD image of the SAD image of Figure 9d (i.e. with disparity equal to 1).

The integral SAD images 900 can be used for each pixel in the search range to find out the disparity values which provides the smallest sum of absolute differences. In the following an example of the determination of the SAD value is provided with reference to Figures 9g and 9h. It is assumed that the search window is 3x3 pixels and that the pixel in the center of the left image is under examination (labeled with the reference 920 in Figures 9g and 9h). In other words, the coordinate values of the pixel are x=2, y=2 in this example. The search range for this particular pixel 920 is illustrated with the square 922 in Figures 9g and 9h. The SAD value for that pixel can then be calculated on the basis of values of four elements in the integral SAD image e.g. as follows. The first value can be regarded as the value of the element 924 at the lower right corner of the search window; the second value can be regarded as the value of the element 926 which is diagonally adjacent to the upper left corner of the search window; the third value can be regarded as the value of the element 928 which is in the same column than the first value and in the same row than the second value; and the fourth value can be regarded as the value of the element 930 which is in the same row than the first value and in the same column than the second value. These four values are combined in such a way that the first 924 and the second value 926 are summed and the third 928 and the fourth value 930 are subtracted. This can also be expressed as the following equation:

$$SAD(x,y) = s(x+r, y+r) + s(x-r, y-r) - s(x-r, y+r) - s(x+r, y-r),$$

in wich r is the size of the search window.

The example of integral SAD images depicted in Figure 9g (disparity = 0) gives SAD=37 and when this value is divided by the number of pixels in the search window (9 in this example), the result is 4.111. Accordingly, the example of integral SAD images depicted in Figure 9h (disparity = 0) gives SAD=2 and when this value is divided by the number of pixels in the search window, the result is 0.222. On the basis of these two examples the disparity = 1 could be selected because it provides smaller SAD value.

The above procedure may be repeated to each disparity value in the disparity range. For example, evaluation of the disparity value for the fourth pixel on the third row (3,2) of the images of Figures 9a and 9b would result the following SAD values: SAD=117/9=13 for disparity = 0. For the disparity = 1 a different search window size may be needed because the right edge of the integral SAD image does not contain any valid values. If the search window size 1x3 were used, SAD=2/3. Therefore, also for the pixel (3,2) the disparity value 1 could be selected.

When evaluating disparities for pixels near the edges of the frames (or pictures), smaller size search windows may need to be used, as was described above.

In some embodiments the search window is symmetrical and has odd number of columns and rows, as in the examples of Figures 9g and 9h, but in some other embodiments the search window may not be symmetrical and/or may comprise even number of rows and/or columns.

The disparity values obtained for the pixels may be stored as a disparity map.

In some embodiments a threshold may have been defined to reduce the possibility of false detections of corresponding blocks. For example, the threshold may be compared with the smallest sum of absolute differences and if the value exceeds the threshold, the disparity estimator 720 may determine that the block which produced the smallest sum of absolute differences may not be the correct block. In such situations it may then be deduced that the search block does not have a corresponding block in the right image, i.e. the block is occluded in the right image or the block is near the edge of the left image.

The above described operations may be repeated until all pixels in the left image have been examined, or until a predefined area of the left image have been examined. It should be understood that the above described operations may be repeated in a sliding window manner for the source blocks, i.e. a source block for the next iteration may be partly overlapping with the source block of the previous iteration, e.g. the location of a source block may be shifted horizontally by one pixel per each iteration of the above described operations for disparity matching.

In some embodiments another disparity map may be produced using the right image as the source image and the left image as the reference image i.e. the right-to-left search is first made. These disparity maps may also be called as a left disparity map and a right disparity map.

During or after producing the left and right disparity map, the confidence map may also be determined. It may utilize the information of sums of absolute differences to determine how reliable the correspondent block determination is (e.g. the smaller the smallest sum of absolute differences the more reliable the detection is). The confidence map determination may also utilize the two disparity maps and find out which pixels have one-to-one correspondence and which pixels do not have one-to-one correspondence. The term one-to-one correspondence means in this context a pair of pixels in the left image and in the right image for which both disparity maps indicate that these pixels correspond with each other. If there are pixels in one of the images which do not have one-to-one correspondence, this may indicate that such a pixel does not have a corresponding block in the other image (i.e. the pixel may belong to an occluded area in the other image) or that, for some reason, the corresponding pixel could not be found from the other image.

The occlusion map may also be formed by using the information provided by the two disparity maps and/or using the information provided by the confidence map.

When the disparity maps, confidence map and the occlusion map have been obtained, a spatial filtering can be applied for the disparity maps and the confidence map (block 120). In some embodiments the spatial filtering includes non-linear spatial filtering aiming to remove outliers in the disparity estimate. This may allow reducing the number of outliers in the initially estimated disparity histogram. This step also provides a more stable behavior for further histogram thresholding, making the algorithm nearly content independent.

The spatial filter should be selected to provide robustness. For example, a 2D median filtering may be used with a certain window size, for example 5x5 window size. More comprehensive filtering, such as cross-bilateral filtering is also feasible.

After filtering the disparity maps and the confidence map, the occlusion map may be recalculated with e.g. left-to-right correspondence.

Selecting confident / non-confident correspondence estimates may be used in discarding outliers in the estimated disparity map. The confidence may be calculated as a combination of a peak ratio and the occlusion map, where occluded zones may have zero confidence and confidence of other areas may vary from e.g. zero to one, depending on their peak-ratio properties.

When the confidence map has been updated a disparity histogram from confidently matched pixels may be calculated.

Possible outliers in the estimated disparity maps may be eliminated by spatial filtering of both disparity and confidence maps. Since both disparity maps (left and right) have been changed in the above process, re-calculation of occlusion map may be needed. Hence, filtered confidence map may once again be combined with updated occlusion map to form the final confidence map.

To determine which elements in the disparity map can be regarded as confident, a confidence threshold value may be defined, wherein confidence values in the confidence map exceeding the threshold may be regarded as non-confident. In some embodiments confidence threshold value is chosen equal to 0.1, while the value can be tuned depending on the particular application.

A disparity histogram may be calculated on the basis of confidently matched pixels in the disparity map. A thresholding process may be used for the disparity histogram in order to obtain disparity limits estimate (block 122). For example, disparity values with low frequency of occurrence in the histogram are discarded where decision about low frequency of occurrence is taken with respect to a pre-defined or adaptively calculated threshold. The threshold value may be calculated as a fraction of the total number of inliers in the histogram, e.g. 0.2 of the number of inliers. The maximum and minimum disparity values, after thresholding, may be assumed as the sought disparity range limits. This process may include using a "guard" interval, added to the found maximum disparity limit and subtracted from found minimum disparity limit if needed. In some embodiments of the present invention, a single fixed threshold may be used irrespective of the content of the images.

The found disparity limits may then be compensated by the factor of the downsampling ratio.

The above described process provides a way to find disparity limits for the image. These disparity limits can then be used to apply disparity/depth estimation algorithm for full-resolution stereo frames with found disparity limits. For example, the disparity search range for stereo matching or disparity/depth estimation for full-resolution can be set to cover the range of minimum found disparity to the maximum found disparity. The estimated disparity/depth map may then be utilized e.g. in stereoscopic mage/video compression or saved for later use.

The above described process may be repeated until new images exist or processing is stopped (block 124).

Many embodiments of the present invention provide relatively accurate disparity range estimation and are applicable to almost any stereoscopic video content, with no changes/parameter optimizations required.

Input sequence of image pairs such as a stereoscopic video may be processed in frame-by-frame manner, allowing streaming type of applications.

A depth view refers to a view that represents distance information of a texture sample from the camera sensor, disparity or parallax information between a texture sample and a respective a texture sample in another view, or similar information. A depth view typically comprises depth pictures (a.k.a. depth maps) having one component, similar to the luma component of texture views. A depth map is an image with per-pixel depth information or similar. For example, each sample in a depth map represents the distance of the respective texture sample or samples from the plane on which the camera lies. In other words, if the z axis is along the shooting axis of the cameras (and hence orthogonal to the plane on which the cameras lie), a sample in a depth map represents the value on the z axis. The semantics of depth map values may for example include the following:

1. Each luma sample value in coded depth view component represents an inverse of real-world distance (Z) value, i.e. 1/Z, normalized in the dynamic range of the luma samples, such to the range of 0 to 255, inclusive, for 8-bit luma representation.

2. Each luma sample value in coded depth view component represents an inverse of real-world distance (Z) value, i.e. 1/Z, which is mapped to the dynamic range of the luma samples, such to the range of 0 to 255, inclusive, for 8-bit luma representation, using a mapping function f(1/Z) or table, such as a piece-wise linear mapping. In other words, depth map values result in applying the function f(1/Z).

3. Each luma sample value in coded depth view component represents a real-world distance (Z) value normalized in the dynamic range of the luma samples, such to the range of 0 to 255, inclusive, for 8-bit luma representation.

4. Each luma sample value in coded depth view component represents a disparity or parallax value from the present depth view to another indicated or derived depth view or view position.

While phrases such as depth view, depth view component, depth picture and depth map are used to describe various embodiments, it is to be understood that any semantics of depth map values may be used in various embodiments including but not limited to the ones described above. For example, embodiments of the invention may be applied for depth pictures where sample values indicate disparity values.

In some embodiments, the dynamic range of sample values of depth maps is selected based on the found disparity limits. For example, if the found minimum disparity limit is denoted *a* and the found maximum disparity limit is *b* in terms of integer values and the depth estimation algorithm operates at quarter-pixel precision or resolution, $c = (b - a) \times 4 + 1$ distinct disparity values may be generated in the depth estimation process. Consequently, a dynamic range of *t* to *t + c*, inclusive, may be used in the created depth maps, where *t* may be selected in a manner that $t >= 0$ and $t + c <=$ the maximum luma sample value in the coding system, e.g. 255 for 8-bit luma representation. In some embodiments, the encoder may encode one or more indications to indicate the values of *t* and/or *c* or similar values specifying the dynamic range of depth map values into the video bitstream for example in a video parameter set structure, in a sequence parameter set structure, as a supplemental enhancement information message, or in any other syntax structure.

An encoding system or any other entity creating or modifying a bitstream including coded depth maps may create and include information on the semantics of depth samples and on the quantization scheme of depth samples into the bitstream. Such information on the semantics of depth samples and on the quantization scheme of depth samples may be for example included in a video parameter set structure, in a sequence parameter set structure, in an supplemental enhancement information message, or any other syntax structure of a video bitstream.

In some embodiments, the found disparity limits may correspond to the minimum value (e.g. zero) and maximum value (e.g. 255 for 8-bit representation) of depth maps created in a depth estimation process. Furthermore, an encoding system or any other entity creating or modifying a bitstream may indicate depth map quantization levels (prior to encoding) within a video bitstream. For example, the nominator and denominator of a quantization step may be indicated in the bitstream and a pre-defined or signalled rounding rule may be applied to non-integer quantization levels derived based on nominator and denominator to achieve integer quantization levels. A quantization step size and/or quantization levels of depth map values may be determined by the encoder side based on the disparity limits.

In many embodiments the disparity map may be used in encoding and/or decoding multimedia or other video streams, for example in forming prediction information. Many embodiments of the present invention may also be implemented in repurposing, virtual view synthesis, 3D scanning, objects detection and recognition, embedding virtual objects in real scenes, etc.

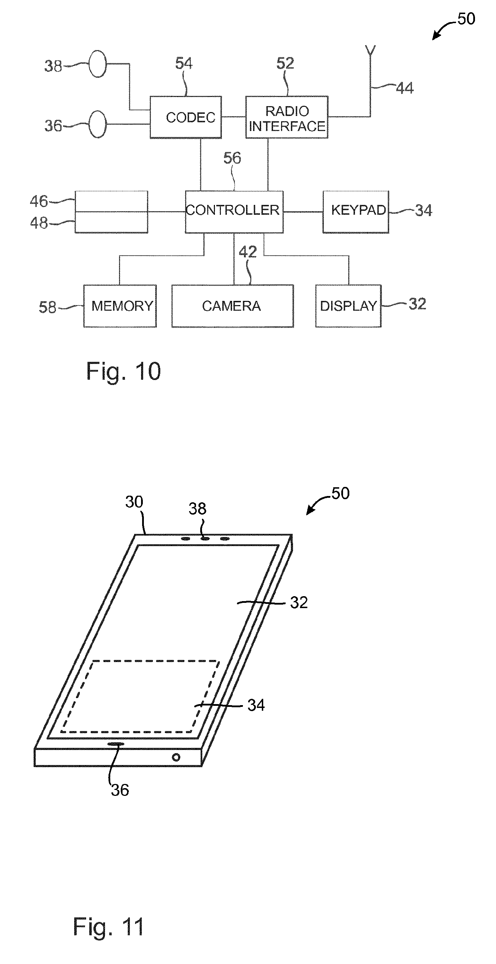

The following describes in further detail suitable apparatus and possible mechanisms for implementing some embodiments. In this regard reference is first made to Figure 10 which shows a schematic block diagram of an exemplary apparatus or electronic device 50, which may incorporate an image processing apparatus according to some embodiments.

The electronic device 50 may for example be a mobile terminal or user equipment of a wireless communication system. However, it would be appreciated that embodiments may be implemented within any electronic device or apparatus which may require disparity determination and stereo or multiview image processing.

As disclosed in Figure 11, the apparatus 50 may comprise a housing 30 for incorporating and protecting the device. The apparatus 50 may further comprise a display 32 e.g. in the form of a liquid crystal display, a light emitting diode (LED) display, an organic light emitting diode (OLED) display. In other embodiments the display may be any suitable display technology suitable to display information. The apparatus 50 may further comprise a keypad 34, which may be implemented by using keys or by using a touch screen of the electronic device. In other embodiments any suitable data or user interface mechanism may be employed. For example the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in embodiments may be any one of: an earpiece 38, speaker, or an analogue audio or digital audio output connection. The apparatus 50 may also comprise a battery (not shown) (or in other embodiments the device may be powered by any suitable mobile energy device such as solar cell, fuel cell or clockwork generator). The apparatus may further comprise a camera 42 capable of recording or capturing images and/or video. In some embodiments the apparatus 50 may further comprise any suitable short range communication solution such as for example a Bluetooth wireless connection or a USB/firewire wired connection or an infrared port for short range line of sight optical connection.

The apparatus 50 may comprise a controller 56 or processor for controlling the apparatus 50. The controller 56 may be connected to memory 58 which in embodiments may store both data and/or may also store instructions for implementation on the controller 56. The controller 56 may further be connected to codec circuitry 54 suitable for carrying out coding and decoding of audio and/or video data or assisting in coding and decoding carried out by the controller 56.

The apparatus 50 may further comprise a card reader 48 and a smart card 46, for example a UICC and UICC reader for providing user information and being suitable for providing authentication information for authentication and authorization of the user at a network.

The apparatus 50 may comprise one or more radio interface circuitries 52 connected to the controller and suitable for generating wireless communication signals for example for communication with a cellular communications network, a wireless communications system or a wireless local area network and/or with devices utilizing e.g. Bluetooth™ technology. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In some embodiments, the apparatus 50 comprises a camera capable of recording or detecting individual frames which are then passed to the codec 54 or controller for processing. In other embodiments of the invention, the apparatus may receive the video image data for processing from another device prior to transmission and/or storage. In other embodiments, the apparatus 50 may receive either wirelessly or by a wired connection the image for coding/decoding.

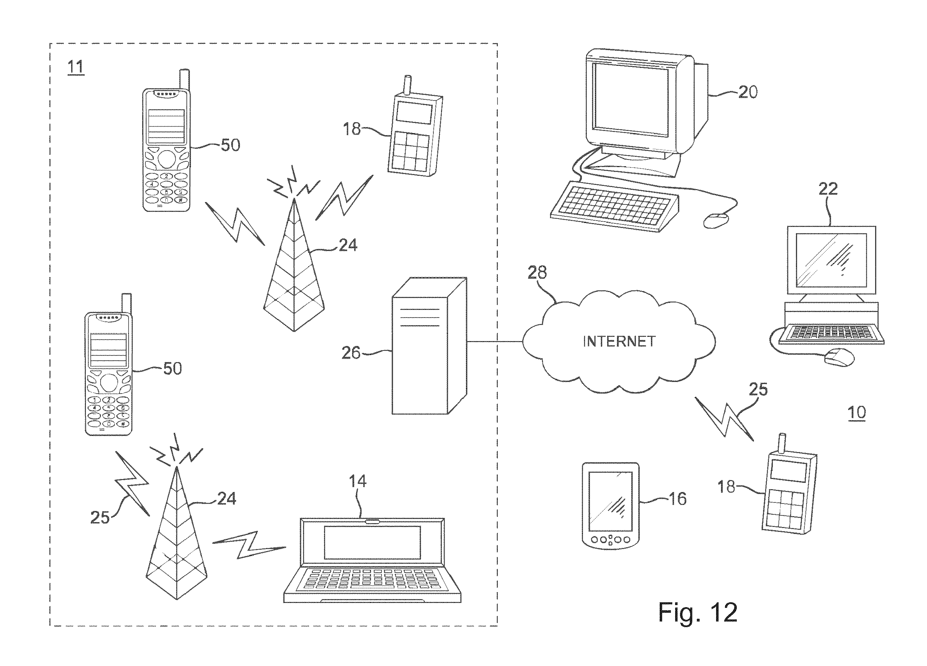

With respect to Figure 12, an example of a system within which embodiments can be utilized is shown. The system 10 comprises multiple communication devices which can communicate through one or more networks. The system 10 may comprise any combination of wired or wireless networks including, but not limited to a wireless cellular telephone network (such as a GSM, UMTS, CDMA network etc.), a wireless local area network (WLAN) such as defined by any of the IEEE 802.x standards, a Bluetooth personal area network, an Ethernet local area network, a token ring local area network, a wide area network, and the Internet.

The system 10 may include both wired and wireless communication devices or apparatuses 50 suitable for implementing embodiments of the invention.

For example, the system shown in Figure 12 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

Some or further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments may communicate using various media including, but not limited to, radio, infrared, laser, cable connections, and any suitable connection.

Although the above examples describe embodiments of the invention operating within a codec within an electronic device, it would be appreciated that the invention as described below may be implemented as part of any video codec. Thus, for example, embodiments of the invention may be implemented in a video codec which may implement video coding over fixed or wired communication paths.

Thus, user equipment may comprise means for image processing such as those described in embodiments of the invention above. It shall be appreciated that the term user equipment is intended to cover any suitable type of user equipment, such as mobile telephones, portable data processing devices or portable web browsers, TVs, monitors for computers, cameras, electronic games, etc.

Furthermore elements of a public land mobile network (PLMN) may also comprise video codecs as described above.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

In the following, some examples will be provided.

According to a first example, there is provided a method comprising:

downsampling a pair of input images to a lower resolution pair of a first image and a second image, estimating disparity between at least a subset of pixels in the first image and at least a subset of pixels in the second image into a disparity image, estimating a confidence of said disparity estimation for at least a subset of pixels in the disparity image into a confidence map, filtering the disparity image and the confidence map to obtain a filtered disparity image and a filtered confidence map, wherein said filtering of a pixel location uses a spatial neighborhood of the pixel location, and estimating a disparity distribution of said pair of images through the filtered disparity image and the confidence map.

In some embodiments the method further comprises estimating the disparity distribution on the basis of a disparity histogram.

In some embodiments the method further comprises estimating at least one disparity limit based on an estimated disparity distribution threshold.

In some embodiments the method further comprises using the at least one disparity limit in depth estimation.

In some embodiments the method further comprises controlling the computational complexity of the method.

In some embodiments of the method controlling the computational complexity comprises defining a complexity limit.

In some embodiments the method further comprises controlling the computational complexity by adjusting at least a downsampling ratio.

In some embodiments the method further comprises controlling the computational complexity by applying a linear computational complexity disparity estimation as a function of one or more input parameters, and determining the values of the one or more input parameters.

In some embodiments of the method the one or more input parameter is image size, window size, and/or a-priori available disparity range.

In some embodiments the method further comprises using the at least one disparity limit in video encoding.

In some embodiments the method further comprises:

encoding, based on the at least one disparity limit, at least one indication of a sample value range in a depth or disparity picture.

In some embodiments the method further comprises:

encoding, based on the at least one disparity limit, at least one indication of a sample value quantization level or a sample value quantization step size in a depth or disparity picture.

According to a second example, there is provided an apparatus comprising at least one processor and at least one memory including computer program code, the at least one memory and the computer program code configured to, with the at least one processor, cause the apparatus to perform at least the following:

downsampling a pair of input images to a lower resolution pair of a first image and a second image,
estimating disparity between at least a subset of pixels in the first image and at least a subset of pixels in the second image into a disparity image,
estimating a confidence of said disparity estimation for at least a subset of pixels in the disparity image into a confidence map,
filtering the disparity image and the confidence map to obtain a filtered disparity image and a filtered confidence map, wherein said filtering of a pixel location uses a spatial neighborhood of the pixel location, and
estimating a disparity distribution of said pair of images through the filtered disparity image and the confidence map.

In some embodiments of the apparatus said at least one memory stored with code thereon, which when executed by said at least one processor, further causes the apparatus to estimate the disparity distribution on the basis of a disparity histogram.

In some embodiments of the apparatus said at least one memory stored with code thereon, which when executed by said at least one processor, further causes the apparatus to estimate at least one disparity limit based on an estimated disparity distribution threshold.

In some embodiments of the apparatus said at least one memory stored with code thereon, which when executed by said at least one processor, further causes the apparatus to use the at least one disparity limit in depth estimation.

In some embodiments of the apparatus said at least one memory stored with code thereon, which when executed by said at least one processor, further causes the apparatus to control the computational complexity of the method.

In some embodiments of the apparatus said at least one memory stored with code thereon, which when executed by said at least one processor, further causes the apparatus to define a complexity limit.

In some embodiments of the apparatus said at least one memory stored with code thereon, which when executed by said at least one processor, further causes the apparatus to adjust at least a downsampling ratio.

In some embodiments of the apparatus said at least one memory stored with code thereon, which when executed by said at least one processor, further causes the apparatus to:

control the computational complexity by applying a linear computational complexity disparity estimation as a function of one or more input parameters, and
determine the values of the one or more input parameters.

In some embodiments of the apparatus the one or more input parameter is image size, window size, and/or a-priori available disparity range.

In some embodiments of the apparatus said at least one memory stored with code thereon, which when executed by said at least one processor, further causes the apparatus to use the at least one disparity limit in video encoding.

In some embodiments of the apparatus said at least one memory stored with code thereon, which when executed by said at least one processor, further causes the apparatus to encode, based on the at least one disparity limit, at least one indication of a sample value range in a depth or disparity picture.

In some embodiments of the apparatus said at least one memory stored with code thereon, which when executed by said at least one processor, further causes the apparatus to encode, based on the at least one disparity limit, at least one indication of a sample value quantization level or a sample value quantization step size in a depth or disparity picture.

In some embodiments the apparatus comprises a communication device comprising:

a user interface circuitry and user interface software configured to facilitate a user to control at least one function of the communication device through use of a display and further configured to respond to user inputs; and
a display circuitry configured to display at least a portion of a user interface of the communication device, the display and display circuitry configured to facilitate the user to control at least one function of the communication device.

In some embodiments the communication device comprises a mobile phone.

According to a third example, there is provided a computer program comprising one or more sequences of one or more instructions which, when executed by one or more processors, cause an apparatus to perform at least the following:

downsampling a pair of input images to a lower resolution pair of a first image and a second image,
estimating disparity between at least a subset of pixels in the first image and at least a subset of pixels in the second image into a disparity image,
estimating a confidence of said disparity estimation for at least a subset of pixels in the disparity image into a confidence map,
filtering the disparity image and the confidence map to obtain a filtered disparity image and a filtered confidence map, wherein said filtering of a pixel location uses a spatial neighborhood of the pixel location, and
estimating a disparity distribution of said pair of images through the filtered disparity image and the confidence map.

In some embodiments the computer program comprises one or more sequences of one or more instructions which, when executed by one or more processors, cause the apparatus to estimate the disparity distribution on the basis of a disparity histogram.

In some embodiments the computer program comprises one or more sequences of one or more instructions which, when executed by one or more processors, cause the apparatus to estimate at least one disparity limit based on an estimated disparity distribution threshold.

In some embodiments the computer program comprises one or more sequences of one or more instructions which, when executed by one or more processors, cause the apparatus to use the at least one disparity limit in depth estimation.

In some embodiments the computer program comprises one or more sequences of one or more instructions which, when executed by one or more processors, cause the apparatus to control the computational complexity of the method.

In some embodiments the computer program comprises one or more sequences of one or more instructions which, when executed by one or more processors, cause the apparatus to define a complexity limit.

In some embodiments the computer program comprises one or more sequences of one or more instructions which, when executed by one or more processors, cause the apparatus to adjust at least a downsampling ratio.

In some embodiments the computer program comprises one or more sequences of one or more instructions which, when executed by one or more processors, cause the apparatus to:

control the computational complexity by applying a linear computational complexity disparity estimation as a function of one or more input parameters, and
determine the values of the one or more input parameters.

In some embodiments of the computer program the one or more input parameter is image size, window size, and/or a-priori available disparity range.

In some embodiments the computer program comprises one or more sequences of one or more instructions which, when executed by one or more processors, cause the apparatus to use the at least one disparity limit in video encoding.

In some embodiments the computer program comprises one or more sequences of one or more instructions which, when executed by one or more processors, cause the apparatus to encode, based on the at least one disparity limit, at least one indication of a sample value range in a depth or disparity picture.

In some embodiments the computer program comprises one or more sequences of one or more instructions which, when executed by one or more processors, cause the apparatus to encode, based on the at least one disparity limit, at least one indication of a sample value quantization level or a sample value quantization step size in a depth or disparity picture.

In some embodiments the computer program is comprised in a computer readable memory.

In some embodiments the computer readable memory comprises a non-transient computer readable storage medium.

According to a fourth example, there is provided an apparatus comprising:

a downsampler adapted to downsample a pair of images to a lower resolution pair of a first image and a second image,
a disparity estimator adapted to estimating disparity between at least a subset of pixels in the first image and at least a subset of pixels in the second image into a disparity image,
a confidence estimator adapted to estimating a confidence of said disparity estimation for at least a subset of pixels in the disparity image into a confidence map,
a filter adapted for filtering the disparity image and the confidence map to obtain a filtered disparity image and a filtered confidence map, wherein said filtering of a pixel location uses a spatial neighborhood of the pixel location, and
a disparity distribution estimator adapted to estimate a disparity distribution of said pair of images through the filtered disparity image and the confidence map.

According to a fifth example, there is provided an apparatus comprising:

means for downsampling a pair of images to a lower resolution pair of a first image and a second image,
means for estimating disparity between at least a subset of pixels in the first image and at least a subset of pixels in the second image into a disparity image,
means for estimating a confidence of said disparity estimation for at least a subset of pixels in the disparity image into a confidence map,
means for filtering the disparity image and the confidence map to obtain a filtered disparity image and a filtered confidence map, wherein said filtering of a pixel location uses a spatial neighborhood of the pixel location, and
means for estimating a disparity distribution of said pair of images through the filtered disparity image and the confidence map.

In some embodiments the apparatus further comprises means for estimating the disparity distribution on the basis of a disparity histogram.

## Claims

1. A method comprising:

   downsampling a pair of input images to a lower resolution pair of a first image and a second image,
   estimating disparity between at least a subset of pixels in the first image and at least a subset of pixels in the second image into a disparity image,
   estimating a confidence of the disparity estimation for at least a subset of pixels in the disparity image into a confidence map,
   filtering the disparity image and the confidence map to obtain a filtered disparity image and a filtered confidence map, wherein the filtering uses a spatial neighborhood of a pixel location of a pixel to be filtered, and
   estimating a disparity distribution of the pair of images through the filtered disparity image and the filtered confidence map.

2. A method according to claim 1, further comprising estimating the disparity distribution on the basis of a disparity histogram.

3. A method according to claim 1 or 2, further comprising estimating at least one disparity limit based on an estimated disparity distribution threshold.

4. A method according to claim 3, further comprising using the at least one disparity limit in depth estimation.

5. A method according to any of the claims 1 to 4, further comprising controlling the computational complexity of the method.

6. A method according to claim 5, controlling the computational complexity comprising defining a complexity limit.

7. A method according to claim 6, further comprising controlling the computational complexity by adjusting at least a downsampling ratio.

8. A method according to claim 6 or 7, further comprising controlling the computational complexity by applying a linear computational complexity disparity estimation as a function of one or more input parameters, and determining the values of the one or more input parameters.

9. A method according to claim 8, wherein the one or more input parameter is image size, window size, and/or a-priori available disparity range.

10. A method according to claim 3, further comprising using the at least one disparity limit in video encoding.

11. A method according to claim 10, further comprising encoding, based on the at least one disparity limit, at least one indication of a sample value range in a depth or disparity picture.

**12.** A method according to claim 10 or 11, further comprising encoding, based on the at least one disparity limit, at least one indication of a sample value quantization level or a sample value quantization step size in a depth or disparity picture.

**13.** An apparatus configured to:

downsample a pair of input images to a lower resolution pair of a first image and a second image,
estimate disparity between at least a subset of pixels in the first image and at least a subset of pixels in the second image into a disparity image,
estimate a confidence of the disparity estimation for at least a subset of pixels in the disparity image into a confidence map,
filter the disparity image and the confidence map to obtain a filtered disparity image and a filtered confidence map, wherein the filtering uses a spatial neighborhood of a pixel location of a pixel to be filtered, and
estimate a disparity distribution of the pair of images through the filtered disparity image and the filtered confidence map.

**14.** The apparatus according to claim 13, wherein the apparatus is further configured to perform the method as claimed in any of claims 2 to 12.

**15.** A computer program product comprising program instructions which when executed by an apparatus cause the apparatus to perform the method as claimed in any of claims 1 to 12.

Fig. 1

Fig. 2

Fig. 3

LEFT 🎥 → DEPTH ESTIMATION → 3D VIDEO CODEC → MULTIVIEW RENDERING ⟶ VIRTUAL VIEW ⟶ } OUTPUT TO STEREO DISPLAY

RIGHT 🎥 →

## Fig. 4

Light source ⚪ $s(t)=sin(2\pi f_m t)$ ⟶ Target

Sensor ▮ | Lens ⬭

Received light: $r(t)=Rsin(2\pi f_m t-\phi)$

$d$

## Fig. 5

$sin(2\pi f_m t)$

Low Pass Filter ⟶ $X=R/2.cos(-\phi)$

Received light: $Rsin(2\pi f_m t-\phi)$

Mixer ⊗ ⟶ $R/2.[cos(-\phi)-cos(4\pi f_m t-\phi)]$

$\phi =atan(-Y/X)$

$R=2\sqrt{X^2+Y^2}$

Mixer ⊗ ⟶ $R/2.[sin(-\phi)+sin(4\pi f_m t-\phi)]$

$cos(2\pi f_m t)$

Low Pass Filter ⟶ $Y=R/2.sin(-\phi)$

## Fig. 6

Fig. 7

Fig. 8a

Fig. 8b

Fig. 9a

Fig. 9b

Fig. 9c

Fig. 9d

Fig. 9e

Fig. 9f

Fig. 9g

Fig. 9h

38 — ⬭

36 — ⬭

54
CODEC

52
RADIO
INTERFACE

44

50

56
CONTROLLER

46
48

KEYPAD — 34

58 — MEMORY

42
CAMERA

DISPLAY — 32

Fig. 10

30    38

50

32

34

36

Fig. 11

Fig. 12

Fig. 13